# DEMANDE DE BREVET EUROPEEN

(11) **EP 4 834 766 A1**
(43) Date de publication de la demande: **04.11.2026**
(21) Numéro de dépôt: 26174408.0
(22) Date de dépôt: 24.04.2026
(51) Int. Cl.: B64D 29/08, B64D 29/06

(54) **SYSTÈME DE VERROUILLAGE D'UN CAPOT D'UNE NACELLE D'UN MOTEUR D'AÉRONEF**

(30) Priorité: 29.04.2025 FR 2504517
(71) Demandeur: Airbus Operations S.A.S., 31060 Toulouse (FR)
(72) Inventeur: VANDERBAUWEDE, Simon, 31060 TOULOUSE (FR); CHARTON, Nicolas, 31060 TOULOUSE (FR); GRANGE, Quentin, 31060 TOULOUSE (FR)
(74) Mandataire: Cabinet Le Guen Maillet

(57) **Abrégé**

L'invention concerne un système de verrouillage (100) pour deux capots (50a-b) d'une nacelle qui comporte, pour chaque capot (50a-b), un crochet (104) mobile en rotation entre une position verrouillée où il coopère avec un galet (52) du capot (50a-b) et une position déverrouillée, une bielle de poignée (106) mobile en rotation entre une position fermée et une position ouverte, une poignée (107) solidaire de la bielle de poignée (106), et pour chaque crochet (104), une bielle à ressort (108) travaillant en traction et monté entre la bielle de poignée (106) et le crochet (104) et arrangé de manière à déplacer le crochet (104) de la position verrouillée à la position déverrouillée lorsque la bielle de poignée (106) passe de la position fermée à la position ouverte et inversement.

Avec un tel arrangement, il y a deux crochets qui sont mis en tension et qui interagissent chacun avec un des capots.

## Description

### DOMAINE TECHNIQUE

La présente invention concerne un système de verrouillage d'un capot d'une nacelle d'un moteur d'aéronef, une nacelle d'un moteur d'aéronef comportant un tel système de verrouillage, ainsi qu'un aéronef comportant une telle nacelle.

### ÉTAT DE LA TECHNIQUE ANTÉRIEURE

Une nacelle entoure le moteur d'aéronef et comporte des capots qui forment une surface aérodynamique. Lors des opérations de maintenance, il est nécessaire d'ouvrir ou de démonter les capots pour permettre à un technicien d'intervenir sur les éléments qui sont sous les capots.

Chaque capot est monté articulé sur plusieurs charnières disposées en partie haute (globalement à 12 heures) et est verrouillé par un système de verrouillage en partie basse (globalement à 6 heures). Les systèmes de verrouillage actuellement mis en œuvre s'appuient sur un crochet monté articulé sur un des capots et qui se verrouille au niveau d'un galet solidaire de l'autre capot. La présente invention propose une alternative permettant d'assurer de la redondance et renforcer la sécurité.

Les documents US-A-2020/263634, US-A-5,915,765 et US-A-4,679,750 divulguent des systèmes de verrouillage de l'état de la technique.

### EXPOSÉ DE L'INVENTION

Un objet de la présente invention est de proposer un système de verrouillage d'un capot d'une nacelle d'un moteur d'aéronef qui assure une meilleure résistance à l'effort.

À cet effet, est proposé un système de verrouillage pour deux capots d'une nacelle d'aéronef, ledit système de verrouillage comportant :
- une structure,
- pour chaque capot, un crochet monté mobile en rotation sur la structure entre une position verrouillée dans laquelle il est destiné à coopérer avec un galet dudit capot pour bloquer ledit capot et une position déverrouillée dans laquelle il ne coopère pas avec le galet pour laisser libre ledit capot,
- une bielle de poignée montée mobile en rotation sur la structure entre une position fermée et une position ouverte,
- une poignée solidaire de la bielle de poignée, et
- pour chaque crochet, une bielle à ressort travaillant en traction et présentant une première extrémité montée articulée sur la bielle de poignée et une deuxième extrémité montée articulée sur le crochet et arrangé de manière à déplacer le crochet associé de la position verrouillée à la position déverrouillée lorsque la bielle de poignée passe de la position fermée à la position ouverte et inversement.

Avec un tel arrangement, il y a deux crochets qui sont mis en tension et qui interagissent chacun avec un des capots et ceci à l'aide d'une seule poignée.

Avantageusement, la liaison entre chaque crochet et la deuxième extrémité de la bielle à ressort associé est réalisée par l'intermédiaire d'une première bielle montée mobile en rotation sur la structure et d'une deuxième bielle montée articulée, d'une part, avec le crochet et, d'autre part, avec la première bielle, et où la première bielle est montée articulée avec la deuxième extrémité de la bielle à ressort.

Avantageusement, le système de verrouillage comporte pour chaque première bielle, une première butée solidaire de la structure contre laquelle ladite première bielle est en butée lorsque le crochet associé est en position verrouillée.

Avantageusement, le système de verrouillage comporte une deuxième butée solidaire de la structure contre laquelle la bielle de poignée est en butée lorsque la bielle de poignée est en position fermée.

Avantageusement, le système de verrouillage comporte un levier de détection monté mobile en rotation et, pour chaque crochet, une tige présentant une première extrémité montée articulée avec ledit crochet et une deuxième extrémité montée articulée avec le levier de détection, et ledit levier de détection est mobile entre une position escamotée dans laquelle il n'empêche pas le passage de la bielle de poignée vers sa position fermée et une position sortie dans laquelle il empêche le passage de la bielle de poignée vers sa position fermée.

L'invention propose également une nacelle d'un moteur d'aéronef comportant deux capots et au moins un système de verrouillage selon l'une des variantes précédentes où chaque capot est monté articulé au niveau d'une partie haute et présente, pour chaque système de verrouillage, un galet disposé au niveau d'une partie basse et arrangé pour coopérer avec le crochet associé en position verrouillée.

Avantageusement, la nacelle comporte :
- une pluralité de systèmes de verrouillage, où les systèmes de verrouillage sont répartis le long des capots où seule l'une des bielles de poignée est équipée d'une poignée, et
- un arbre coaxial avec un axe de rotation commun à toutes les bielles de poignée et solidaire de toutes les bielles de poignée.

L'invention propose également un aéronef comportant au moins une nacelle selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef équipé d'une nacelle équipée d'un système de verrouillage selon l'invention,
Fig. 2 est une représentation schématique en vue de face d'un système de verrouillage selon l'invention en position verrouillée,
Fig. 3 est une représentation schématique en vue de face du système de verrouillage de la Fig. 2 en position déverrouillée, et
Fig. 4 est une vue en perspective du système de verrouillage de la Fig. 2 en position déverrouillée.

### EXPOSÉ DÉTAILLÉ DE MODES DE RÉALISATION

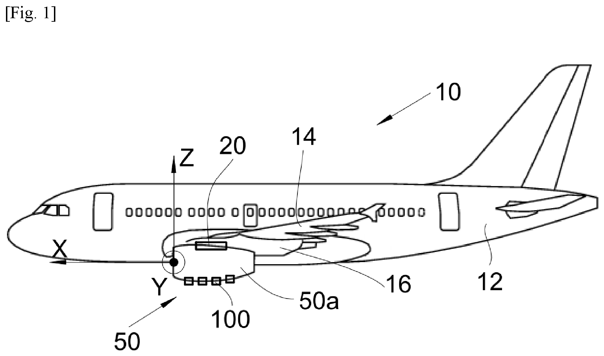

La Fig. 1 montre un aéronef 10 qui comporte un fuselage 12 de part et d'autre duquel est fixée une aile 14 et chaque aile 14 porte au moins une nacelle 50 dans laquelle est disposé un moteur. La fixation de la nacelle 50 à l'aile 14 est assurée par un mât 16.

Dans la description qui suit, et par convention, on appelle X l'axe longitudinal de la nacelle 50 qui est parallèle à l'axe longitudinal de l'aéronef 10, orienté positivement dans le sens d'avancement de l'aéronef 10, on appelle Y l'axe transversal qui est horizontal lorsque l'aéronef 10 est au sol, et Z l'axe vertical qui est vertical lorsque l'aéronef 10 est au sol, ces trois axes X, Y et Z étant orthogonaux entre eux.

La nacelle 50 comporte deux capots 50a-b qui sont disposés de part et d'autre d'un plan médian vertical XZ. Chaque capot 50a-b est monté articulé au niveau d'une partie haute (globalement à 12 heures) dudit capot 50a-b sur le mât 16 ou sur une structure du moteur par l'intermédiaire de charnières 20.

La nacelle 50 comporte également au moins un système de verrouillage 100 selon l'invention. Dans le mode de réalisation de l'invention représenté sur la Fig. 1, il y a plusieurs systèmes de verrouillage 100 et les systèmes de verrouillage 100 sont répartis le long des capots 50a-b, et plus particulièrement le long des bords inférieurs des capots 50a-b.

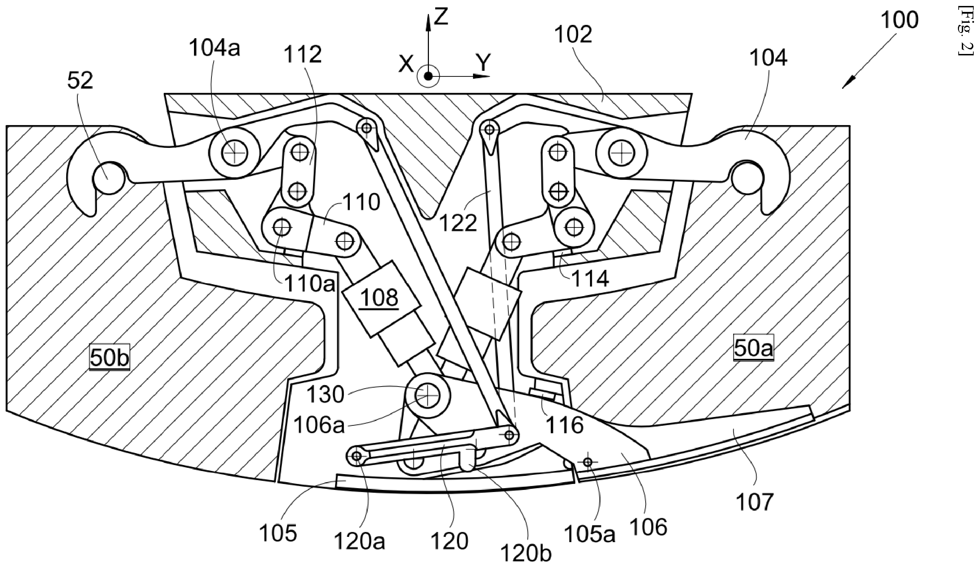

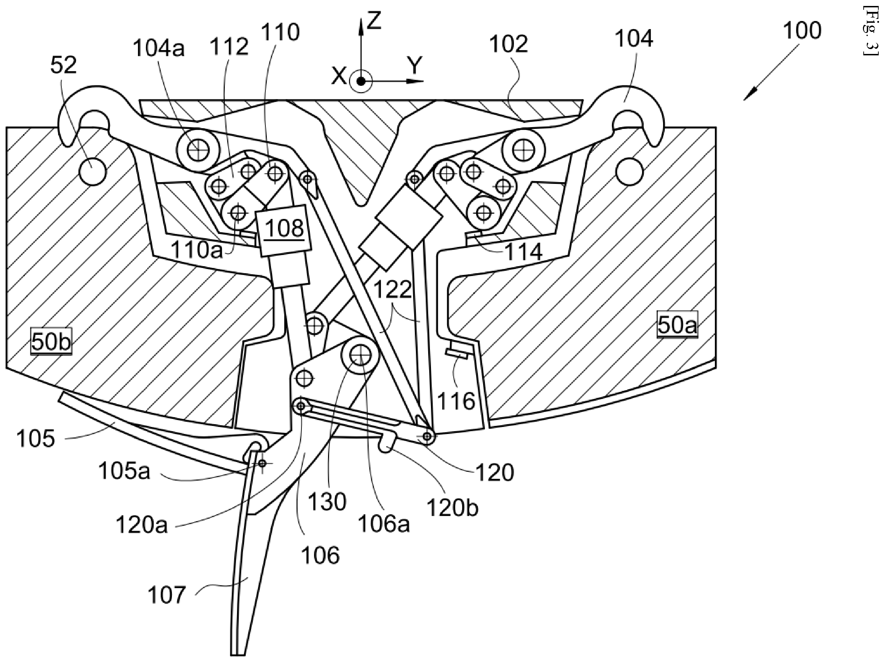

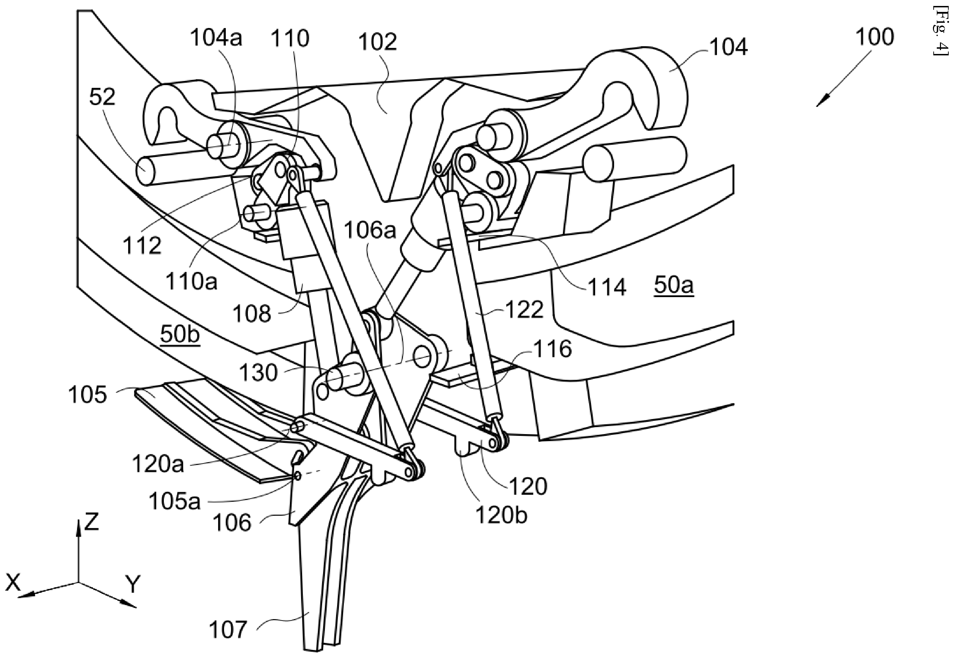

La Fig. 2 montre le système de verrouillage 100 selon l'invention vue de face et en position verrouillée et la Fig. 3 et la Fig. 4 montrent le même système de verrouillage 100 en position déverrouillée.

Chaque capot 50a-b présente un galet 52 disposé au niveau d'une partie basse dudit capot 50a-b (globalement à 6 heures). Dans le cas où il y a plusieurs systèmes de verrouillage 100, chaque capot 50a-b présente un galet 52 pour chacun desdits systèmes de verrouillage 100. Le système de verrouillage 100 comporte une structure 102 qui peut être une partie du moteur ou de la nacelle 50.

Le système de verrouillage 100 comporte également, pour chaque capot 50a-b, un crochet 104 monté mobile en rotation sur la structure 102 entre une position verrouillée (Fig. 2) dans laquelle il coopère avec le galet 52 du capot 50a-b correspondant pour bloquer ledit capot 50a-b et une position déverrouillée (Fig. 3) dans laquelle il ne coopère pas avec le galet 52 pour laisser libre ledit capot 50a-b qui peut alors se déplacer autour des charnières 20.

L'axe de rotation 104a de chaque crochet 104 est ici parallèle à l'axe longitudinal X.

Le système de verrouillage 100 comporte également une bielle de poignée 106 montée mobile en rotation sur la structure 102 entre une position fermée (Fig. 2) et une position ouverte (Fig. 3). L'axe de rotation 106a de la bielle de poignée 106 est ici parallèle à l'axe longitudinal X. La présente invention prévoit un système de transmission du mouvement respectivement entre chaque crochet 104 et la même bielle de poignée 106. Chaque système de transmission comprend en série deux dispositifs d'arc-boutement permettant si l'un est défaillant d'être repris par l'autre pour assurer le mouvement du crochet 104. Les deux systèmes de transmission sont liés à un même axe au niveau de la bielle de poignée 106 : dans la forme de réalisation illustrée, ils se trouvent liés à l'axe de part et d'autre de la bielle de poignée 106. Par ailleurs, est également prévu un système de détection de défaillance de chaque système de transmission du mouvement, parallèlement à ce dernier. Ce système de détection assure une liaison mécanique directe entre le crochet 104 et la structure 102. Ce système mécanique a pour but non pas d'assurer la transmission du mouvement (qui est assurée par le premier chemin) mais de prévenir un opérateur si le système de transmission est défaillant. Il a pour but d'offrir une indication mécanique que le système de transmission du mouvement est défaillant et permet mécaniquement d'empêcher dans ce cas la fermeture du capot 50a-b concerné.

Le système de verrouillage 100 comporte également une poignée 107 qui est solidaire de la bielle de poignée 106 et qui peut être prise en main par un technicien depuis l'extérieur de la nacelle 50. Le déplacement de la poignée 107 par le technicien va entraîner le déplacement en rotation de la bielle de poignée 106. En position fermée, la poignée 107 s'escamote dans un des capots 50a pour des raisons d'aérodynamisme.

Pour chaque crochet 104, le système de verrouillage 100 comporte une bielle à ressort 108 qui travaille en traction. La bielle à ressort 108 présente une première extrémité montée articulée sur la bielle de poignée 106 et une deuxième extrémité montée articulée indirectement sur le crochet 104. La deuxième extrémité est ici solidaire du fût de la bielle à ressort 108 et la première extrémité est ici solidaire de la tige de la bielle à ressort 108. La tige est mobile en translation par rapport au fût, c'est-à-dire qu'elle peut sortir plus ou moins du fût en fonction des efforts qui s'exercent entre les deux extrémités. La bielle à ressort 108 présente également un ressort de traction qui est monté dans le fût, et monté entre le fût et la tige pour tirer sur la tige et la faire rentrer dans le fût.

Chaque bielle à ressort 108 est arrangée de manière à déplacer le crochet 104 associé de la position verrouillée à la position déverrouillée lorsque la bielle de poignée 106 passe de la position fermée à la position ouverte et inversement sous l'action de la poignée 107. L'articulation associée à chaque extrémité des bielles à ressort 108 est au moins une rotation dont l'axe est ici parallèle à l'axe longitudinal X.

Avec un tel arrangement, chaque capot 50a-b est maintenu en position verrouillée par au moins un crochet 104 où chacun est associé à un galet 52 et chaque crochet 104 est soumis à la traction d'une bielle à ressort 108 pour renforcer structurellement les capots 50a-b.

Dans le mode de réalisation de l'invention représenté ici, la liaison entre chaque crochet 104 et la deuxième extrémité de la bielle à ressort 108 associée est réalisée par l'intermédiaire d'une combinaison entre une première bielle 110 et d'une deuxième bielle 112.

La première bielle 110 est montée mobile en rotation sur la structure 102, ici autour d'un axe de rotation 110a parallèle à l'axe longitudinal X.

La deuxième bielle 112 est montée articulée, d'une part, par une première extrémité avec le crochet 104 et, d'autre part, par une deuxième extrémité avec la première bielle 110 tandis que la première bielle 110 est montée articulée avec la deuxième extrémité de la bielle à ressort 108.

L'articulation associée à chaque extrémité des deuxièmes bielles 112 et à la première bielle 110 est au moins une rotation dont l'axe est ici parallèle à l'axe longitudinal X.

Pour arrêter les crochets 104 lorsqu'ils sont en position verrouillée, le système de verrouillage 100 comporte pour chaque première bielle 110, une première butée 114 solidaire de la structure 102 contre laquelle ladite première bielle 110 est en butée lorsque le crochet 104 associé est en position verrouillée. La première 110 et la deuxième 112 bielles et la butée 114 forment le premier dispositif d'arc-boutement.

De la même manière, pour arrêter la bielle de poignée 106 lorsqu'elle est en position fermée, le système de verrouillage 100 comporte une deuxième butée 116 solidaire de la structure 102 contre laquelle la bielle de poignée 106 est en butée lorsqu'elle est en position fermée. La bielle de poignée 106 et la bielle à ressort 108 avec la butée 116 forment le deuxième dispositif d'arc-boutement.

Pour que la bielle de poignée 106 ou la poignée 107 ne puissent pas être déplacées vers la position fermée lorsqu'au moins un des crochets 104 n'est pas en position verrouillée, le système de verrouillage 100 présente un système de détection de défaillance approprié comme vu plus haut.

Le système de détection comporte ainsi pour chaque crochet 104, un levier de détection 120 et une tige 122.

Le levier de détection 120 est monté mobile en rotation autour d'un axe de rotation 120a lié à la structure 102 qui est ici parallèle à l'axe longitudinal X entre une position escamotée dans laquelle il n'empêche pas le passage de la bielle de poignée 106 vers sa position fermée et une position sortie. Dans le mode de réalisation de l'invention représenté ici, le levier de détection 120 présente une protubérance 120b qui fait saillie vers l'extérieur de la nacelle 50 en position sortie. Ainsi si tout va bien lorsque la bielle de poignée 106 est en position fermée, elle est affleurante au capot 50a-b et l'opérateur sait ainsi que le capot 50a-b est bien fermé. Lorsque la bielle de poignée 106 est en position ouverte, la protubérance est visible et l'opérateur sait que le crochet 104 est sorti. En revanche s'il y a une défaillance sur le système de transmission, le crochet 104 étant directement lié à la structure par la tige 122 et le levier de détection 120, si le crochet 104 ne bouge pas du fait de la défaillance, il en est de même du levier de détection 120 ce qui permet de détecter une défaillance.

Chaque tige 122 présente une première extrémité montée articulée avec le crochet 104 associé et une deuxième extrémité montée articulée avec le levier de détection 120. L'articulation associée à chaque extrémité des tiges 122 est au moins une rotation dont l'axe est ici parallèle à l'axe longitudinal X.

Lorsque les deux crochets 104 se déplacent de la position verrouillée à la position déverrouillée, ils repoussent le levier de détection 120 qui passe en position sortie et lorsque les deux crochets 104 se déplacent de la position déverrouillée à la position verrouillée, ils tirent sur le levier de détection 120 qui s'escamote vers la position escamotée.

Si au moins un des crochets 104 ne passe pas en position verrouillée, le levier de détection 120 reste en position sortie et le déplacement de la bielle de poignée 106 vers la position fermée est impossible.

Dans le mode de réalisation de l'invention représenté ici, pour aider à la manipulation de la poignée 107, le système de verrouillage 100 comporte une sous-poignée 105 qui est montée mobile en rotation sur la bielle de poignée 106 autour d'un axe de rotation 105a. La sous-poignée 105 est mobile entre une position déployée et une position rentrée. En position rentrée, la sous-poignée 105 prolonge la poignée 107 pour former une surface aérodynamique en fermant l'espace entre les capots 50a-b. En position déployée, la sous-poignée 105 s'étend vers l'extérieur de la nacelle 50.

Dans le mode de réalisation de l'invention représenté à la Fig. 1, il y a plusieurs systèmes de verrouillage 100 et selon une première variante, chacun d'eux peut avoir une poignée 107 et dans ce cas, l'ouverture et la fermeture des capots 50a-b nécessitent la manœuvre de chaque poignée 107.

Selon une autre variante, il est possible d'avoir une poignée 107 commune à tous les systèmes de verrouillage 100, ainsi une seule des bielles de poignée 106 est équipée d'une poignée 107. Les axes de rotation 106a de toutes les bielles de poignée 106 sont coaxiaux et la nacelle 50 comporte alors un arbre 130 coaxial avec l'axe de rotation 106a et solidaire de toutes les bielles de poignée 106.

Ainsi, le déplacement de la poignée 107 va entraîner le déplacement de toutes les bielles de poignée 106.

## Revendications

1. Système de verrouillage (100) pour deux capots (50a-b) d'une nacelle (50) d'aéronef (10), ledit système de verrouillage (100) comportant :
- une structure (102),
- pour chaque capot (50a-b), un crochet (104) monté mobile en rotation sur la structure (102) entre une position verrouillée dans laquelle il est destiné à coopérer avec un galet (52) dudit capot (50a-b) pour bloquer ledit capot (50a-b) et une position déverrouillée dans laquelle il ne coopère pas avec le galet (52) pour laisser libre ledit capot (50a-b),
ledit système de verrouillage (100) étant **caractérisé en ce qu'**il comporte en outre :
- une bielle de poignée (106) montée mobile en rotation sur la structure (102) entre une position fermée et une position ouverte,
- une poignée (107) solidaire de la bielle de poignée (106), et
- pour chaque crochet (104), une bielle à ressort (108) travaillant en traction et présentant une première extrémité montée articulée sur la bielle de poignée (106) et une deuxième extrémité montée articulée sur le crochet (104) et arrangé de manière à déplacer le crochet (104) associé de la position verrouillée à la position déverrouillée lorsque la bielle de poignée (106) passe de la position fermée à la position ouverte et inversement.

2. Système de verrouillage (100) selon la revendication 1, **caractérisé en ce que** la liaison entre chaque crochet (104) et la deuxième extrémité de la bielle à ressort (108) associé est réalisée par l'intermédiaire d'une première bielle (110) montée mobile en rotation sur la structure (102) et d'une deuxième bielle (112) montée articulée, d'une part, avec le crochet (104) et, d'autre part, avec la première bielle (110), et où la première bielle (110) est montée articulée avec la deuxième extrémité de la bielle à ressort (108).

3. Système de verrouillage (100) selon la revendication 2, **caractérisé en ce qu'**il comporte pour chaque première bielle (110), une première butée (114) solidaire de la structure (102) contre laquelle ladite première bielle (110) est en butée lorsque le crochet (104) associé est en position verrouillée.

4. Système de verrouillage (100) selon l'une des revendications 1 à 3, **caractérisé en ce qu'**il comporte une deuxième butée (116) solidaire de la structure (102) contre laquelle la bielle de poignée (106) est en butée lorsque la bielle de poignée (106) est en position fermée.

5. Système de verrouillage (100) selon l'une des revendications 1 à 4, **caractérisé en ce qu'**il comporte un levier de détection (120) monté mobile en rotation et, pour chaque crochet (104), une tige (122) présentant une première extrémité montée articulée avec ledit crochet (104) et une deuxième extrémité montée articulée avec le levier de détection (120), et **en ce que** ledit levier de détection (120) est mobile entre une position escamotée dans laquelle il n'empêche pas le passage de la bielle de poignée (106) vers sa position fermée et une position sortie dans laquelle il empêche le passage de la bielle de poignée (106) vers sa position fermée.

6. Nacelle (50) d'un moteur d'aéronef (10) comportant deux capots (50a-b) et au moins un système de verrouillage (100) selon l'une des revendications précédentes où chaque capot (50a-b) est monté articulé au niveau d'une partie haute et présente, pour chaque système de verrouillage (100), un galet (52) disposé au niveau d'une partie basse et arrangé pour coopérer avec le crochet (104) associé en position verrouillée.

7. Nacelle (50) selon la revendication 6, **caractérisée en ce qu'**elle comporte :
- une pluralité de systèmes de verrouillage (100) où les systèmes de verrouillage (100) sont répartis le long des capots (50a-b), où seule l'une des bielles de poignée (106) est équipée d'une poignée (107), et
- un arbre (130) coaxial avec un axe de rotation (106a) commun à toutes les bielles de poignée (106) et solidaire de toutes les bielles de poignée (106).

8. Aéronef (10) comportant au moins une nacelle (50) selon l'une des revendications 6 ou 7.
